# EUROPEAN PATENT APPLICATION

(11) **EP 4 722 166 A1**
(43) Date of publication of application: **08.04.2026**
(21) Application number: 24383075.9
(22) Date of filing: 04.10.2024
(51) Int. Cl.: C02F 1/461, C02F 1/463

(54) **METHOD AND DEVICE FOR CONTINUOUSLY TREATING WASTEWATER**

(71) Applicant: Universitat de Girona, 17071 Girona (ES)
(72) Inventor: Magrí Aloy, Albert, 08303 Mataró (ES); Company Masó, Emma, 17464 Cervià de Ter (ES); Pous Rodríguez, Narcís, 17174 Sant Feliu de Pallerols (ES); Colprim Galceran, Jesús, 17820 Banyoles (ES); Ceballos-Escalera López, Alba, 08415 Bigues i Riells (ES)
(74) Representative: Curell Suñol S.L.P.

(57) **Abstract**

The invention relates to a method for continuously treating an water stream (101), said method comprising [a] a precipitation step (102), wherein in said precipitation step the pH of an influent water stream (101) is electrochemically adjusted to a pH suitable for the precipitation of a salt, said salt being dissolved in said influent water stream (101), to obtain a precipitated salt (104) and an exhausted water stream (103), and [b] a neutralisation step (105), wherein in said neutralisation step the pH of said exhausted water stream (103) is electrochemically neutralised to obtain a treated water stream (106). The invention also relates to a water treating device (1) suitable to implement said method.

## Description

### Field of the invention

The invention relates to the technical field of water treatment, preferably wastewater treatment. Particularly, the invention relates to a method for continuously treating a water stream, preferably a wastewater stream. The invention further relates to a water treating device for continuously treating a water stream, preferably a wastewater stream.

### State of the art

Water streams, and particularly wastewater streams, transporting large amounts of nutrients in the form of ions, such as nitrogen, potassium, or phosphorus, can cause problems if directly released to the environment, such as eutrophication or salinization, disrupting the balance existing in natural ecosystems.

Ion removal from water streams, preferably from wastewater streams, can be performed by different treatments, particularly, by modifying the water pH and recovering these ions as precipitated salts. For instance, phosphate can be recovered from wastewater as calcium phosphate (hydroxyapatite), magnesium phosphate (struvite), or iron phosphate (vivianite), and valorised by the chemical industry, or as a fertilizer. Depending on the original composition of the wastewater, the addition of metal ions (i.e., Ca²⁺, Mg²⁺, or Fe²⁺) can be necessary to allow this precipitation to occur.

However, the presence of an excessive amount of these metal ions can cause scaling in industrial and domestic piping systems, making it necessary to use water softening treatment to remove them, often in the form of carbonate salts.

Known solutions to this problem involve adding chemical reagents such as sodium hydroxide (NaOH), to increase the pH of the water, and to trigger crystallization reactions that lead to the formation of precipitated salts. Then, to safely return a treated water stream, further treatment is required to return readjust the pH suitable for its release to the environment or its re-use in industrial or domestic settings involves. Neutralization of high pH values is normally achieved by dosing sulfuric acid (H₂SO₄) and neutralization of low pH values is normally achieved by dosing sodium hydroxide (NaOH).

However, these solutions mentioned above have several problems. Chemical reagents are expensive and may affect the quality of the final products obtained after treatment such as the precipitated salts and the treated water. Furthermore, the transportation and storage of chemicals implies additional costs and needs to be compliant with safety requirements. The supply of chemicals also involves the addition of other ions to water (e.g.: SOa²⁻, Na⁺) that may need further treatment to be removed, thus increasing the complexity and cost of treatment.

Therefore, in this context, there is a clear need to provide solutions that solve the above-mentioned problems and that allow to treat water streams, particularly wastewater streams, in a cost-effective and environmentally friendly manner.

### Summary of the invention

It is an object of the invention to provide a method for continuously treating a water stream, preferably a wastewater stream, that allows to reduce the content of nutrients in said water stream, preferably to reduce the content of nutrients such as nitrogen, phosphorus, or potassium, and of trace elements such as magnesium or calcium, from said water stream in a continuous, scalable and simple manner, with a reduced number of treatment steps and without using additives, resulting in an overall low cost and environmentally friendly process.

This purpose is achieved by a method of the type indicated at the beginning, characterised in that said method comprises the following steps:
[a] a precipitation step, wherein in said precipitation step the pH of an influent water stream is electrochemically adjusted to a pH value suitable for the precipitation of a salt, said salt being dissolved in said influent water stream, to obtain a precipitated salt and an exhausted water stream, and
[b] a neutralisation step, wherein in said neutralisation step the pH of said exhausted water stream is electrochemically neutralised to obtain a treated water stream,
wherein said step [a] is performed by making said influent water stream flow by a first side of an ion exchange membrane and step [b] is performed by making said exhausted water stream obtained in step [a] flow by a second side of said ion exchange membrane, said second side being opposite to said first side of said ion exchange membrane, and by creating a difference in electric potential between said first and second sides of said ion exchange membrane, such that said steps [a] and [b] are performed simultaneously and continuously, and such that in step [a] the electrochemical adjustment of the pH of said influent water stream is obtained by a first water reduction/oxidation reaction occurring in said influent water stream and in step [b] the electrochemical neutralisation of the pH of said exhausted water stream is obtained by a second water oxidation/reduction reaction occurring in said exhausted water stream, said second water oxidation/reduction reaction occurring in step [b] being the reverse water oxidation/reduction reaction of said first water reduction/oxidation reaction occurring in step [a].

In the context of the invention, an "ion exchange membrane" is a physical barrier, impermeable to water, that selectively allows certain chemical entities to pass through said membrane, that is from one side to the other side of said membrane.

In the context of the invention, said water stream to be treated by the method according to the invention is preferably a wastewater stream.

In the context of the invention, "an influent water stream" or "an influent wastewater stream" means a water stream or a wastewater stream "that flows in", that is that enters, for example, in the first step of the method according to the invention, or in the device according to the invention.

In the context of the invention, said exhausted water stream obtained after step [a] is preferably an exhausted wastewater stream.

Preferably, said ion exchange membrane is a cationic ion exchange membrane or said ion exchange membrane is an anionic ion exchange membrane. In the context of the invention, a cationic ion exchange membrane is a barrier that selectively allows cations, or positively charged atoms and/or molecules, to pass through, and an anionic ion exchange membrane is a barrier that selectively allows anions, or negatively charged atoms and/or molecules, to pass through. One of the functions of said ion exchange membrane is to separate said influent water stream and said exhausted water stream, and to maintain a difference in pH between said influent water stream and said exhausted water stream, while allowing the balancing of the electrical charge between the two streams. For example, by allowing the circulation of certain cations and/or anions between the two water streams but blocking the circulation of others, the presence of the ion exchange membrane between said influent water stream and said exhausted water stream avoids a charge build-up on one of the streams and maintains the system with a zero net charge.

In the context of the invention, it is to be understood that "creating a difference in electric potential" between both sides of said ion exchange membrane, refers to applying a voltage between both sides of said ion exchange membrane such that an electrical current can flow between said first and second sides of said ion exchange membrane. Thus, by having said influent water stream and said exhausted water stream flow by said first and second sides, respectively, of said ion exchange membrane, a water reduction/oxidation reaction takes place within each stream. For example, when said electrical potential difference is applied via electrodes, by having a cathode within said influent water stream and an anode within said exhausted water stream, said cathode and said anode being connected to a power source, the following exemplary water reduction oxidation reactions take place, by said electrodes respectively within each stream:

Anode (oxidation): H₂O(l) → 1/2 O₂(g) + 2 H⁺(aq) + 2e⁻

Cathode (reduction): 2 H₂O(l) + 2e⁻ → H₂(g) + 2 OH⁻(aq)

For example, by guiding said influent water stream by the cathode side of said ion exchange membrane, then guiding the resulting exhausted water stream by the anode side of said ion exchange membrane, the above water reduction/oxidation reactions generate an increase of the pH of said influent water stream and a corresponding decrease of the pH of said exhausted water stream.

By adjusting the electric potential difference / electric current applied between both sides of the ion exchange membrane, said increase/decrease of the pH of each of the water streams can be finely tuned to a desired value. For example, the pH of said influent water stream, which originally can be found, for example, in the range of 7 - 8 can be adjusted to a value suitable for the precipitation of a particular salt of interest, for example, to a pH of 11.5, allowing the precipitation of potassium-magnesium-phosphate (K-struvite). Concurrently, the pH of said exhausted water stream is neutralised to the original pH of said influent wastewater. Following with the example, the pH of the exhausted water stream will be adjusted to the original pH in the range of 7 - 8 that the influent water stream had before being treated. By inverting the position of said cathode and said anode with respect to the membrane, the pH of said influent water stream can be decreased and the pH of said exhausted water stream can be increased in the same way.

The method according to the invention allows to continuously precipitate salts from said influent water stream thus reducing its nutrient load and concurrently allows to neutralise the resulting exhausted wastewater, thus making it possible to discard the treated water without further treatment, with a reduced energy consumption, and without using any chemical additives. The method according to the invention provides therefore an environmentally friendly, low-cost and simplified method for wastewater treatment, that further provides the opportunity to recover and directly recycle the precipitated salts, for example, to produce fertilizers, by recovering the obtained solid precipitates, and the resulting treated water stream, for example, to water crops in agricultural operations.

It is a further object of the invention to provide a water treating device for continuously treating a water stream, preferably a wastewater stream, that allows reducing the content of nutrients in said water stream, preferably reducing the content of nutrients such as nitrogen, phosphorus, and of trace elements such as magnesium or calcium from said water stream in a continuous, scalable, and simple manner, with a reduced number of treatment steps, preferably with a single treatment, and without using additives, resulting in an overall low cost process.

This purpose is achieved by a water treating device of the type indicated at the beginning, characterised in that said water treating device comprises a first compartment, a second compartment, and an ion exchange membrane, said first compartment having a first upper section and a first lower section, and said first compartment being at least partially delimited by said ion exchange membrane at least at said first upper section of the first compartment, and said second compartment having a second upper section and a second lower section, and said second compartment being at least partially delimited by said ion exchange membrane at least at said second upper section of the second compartment, and in that said first and second compartments are fluidically connected with each other at their lower sections by a fluidic connection, and in that said water treating device further comprises a first electrode and a second electrode, wherein said first electrode is adapted and arranged within said first upper section of said first compartment and said second electrode is adapted and arranged within said second upper section of said second compartment, such as to allow an electric current to be applied across said ion exchange membrane.

The water treating device according to the invention allows to treat a water stream, preferably a wastewater stream, by guiding an influent water stream continuously first by one side, preferably by a first side, of an ion exchange membrane, then by the other side, preferably by a second side, of said ion exchange membrane and to apply an electrical potential difference, thus creating an electric current flow, between said sides of said ion exchange membrane, and triggering the water redox reactions mentioned above at each side of said ion exchange membrane.

The water treating device according to the invention allows the compartmentalization of the water streams as they progress through the treatment. That is, the water treating device according to the invention allows the influent water stream and the exhausted water stream to be separated at least along some portions of their respective trajectory. Thus, this compartmentalization allows the pH of said influent water stream and the pH said exhausted water stream, within each of these separated portions of their respective trajectories, to be adjusted to a different pH value concurrently. As a single difference in electrical potential is applied, the pH of each stream is adjusted in balancing magnitudes. This allows the selective precipitation of salts dissolved within said influent water stream, and the neutralisation of the exhausted water stream, with the same power source and with the same power consumption, thus simplifying the treatment of water streams, for example, by allowing automation, and reducing its overall energy consumption and overall cost.

The invention further includes several preferred features that are object of the dependent claims and the utility of which will be highlighted hereinafter in the detailed description of preferred embodiments of the invention.

Preferably, said difference in electric potential created between said first and second sides of said ion exchange membrane is obtained by applying a voltage between said first and second sides of said ion exchange membrane, and generating an electric current flowing between said first and second sides of said ion exchange membrane.

Preferably, said difference in electric potential created between said first and second sides of said ion exchange membrane is obtained by applying a voltage between a first and a second electrodes, and generating an electric current flowing between said first and said second electrodes, one of said first and second electrodes being arranged by said first side of said ion exchange membrane and in contact with said influent water stream, and the other of said first and second electrodes being arranged by said second side of said ion exchange membrane and in contact with said exhausted water stream, such that said electric current flows across said ion exchange membrane.

Using an electrode at each side of the ion exchange membrane and in contact with each stream allows maximizing the surface where said water reduction/oxidation reactions are obtained. More preferably, said electrodes are non-sacrificial electrodes. Non-sacrificial electrodes can be made of materials, such as stainless steel or platinized titanium, which are able to conduct an electrical current but do not corrode or degrade upon water electrolysis (water reduction/oxidation reactions) taking place around them.

Preferably, said first electrode is a cathode, and said second electrode is an anode, said cathode being located by said first side of said ion exchange membrane and said cathode being in contact with said influent water stream, and said anode being located by said second side of said ion exchange membrane and said anode being in contact with said exhausted water stream, such that in step [a] the pH of said influent water stream can be increased by a water reduction reaction occurring in said influent water stream and in step [b] the pH of said exhausted water stream can be decreased by a water oxidation reaction occurring in said exhausted water stream, said water oxidation reaction being the reverse reaction of said water reduction reaction occurring in step [a].

Preferably, in step [a] said influent water stream flows by said membrane in a substantially downwards direction and in step [b] said exhausted water stream flows by said ion exchange membrane in a substantially upwards direction, opposite to said substantially downwards direction, and said ion exchange membrane extends vertically between said influent water stream and said exhausted water stream in a direction substantially parallel to said substantially downwards and said substantially upwards directions.

In the context of the invention, the expressions "substantially downwards" and "substantially upwards" are to be understood in a framework wherein the method is operated by making said water streams, that said influent water stream, and said exhausted water stream, flow by said ion exchange membrane parallel to a substantially vertical axis defined by said ion exchange membrane. Said vertical axis is to be understood relative to a horizontal direction defined by the supporting surface where the ion exchange membrane used to implement the method according to the invention is mounted. Said horizontal direction can be defined, for example, by the floor where the equipment used to implement the method according to the invention is placed, or by a support where the equipment used to implement the method according to the invention is placed. Said vertical direction can be defined, for example, by the membrane itself or by the supports used to mount said membrane. For example, in the context of the invention, said "substantially downwards" direction is therefore to be understood as a flow direction that flows, for example, driven by gravity, towards said floor, and said "substantially upwards" direction is therefore to be understood as a flow direction that flows, for example, against gravity, further from said floor.

Operating the method according to the invention in said vertical direction, that is having an ion exchange membrane extending vertically, and having said influent water stream flow in a substantially downwards direction and said exhausted water stream flow in a substantially upwards direction opposite to said substantially downwards direction provides several advantages. First, it allows to reduce the operation power consumption of the wastewater treatment because following the principle of communicating vessels, the flow of said water streams can be driven by gravity alone, avoiding the need for mechanical means, such as pumps or the like, to move the wastewater. Second, as precipitation occurs within said influent water stream, the precipitated particles are driven down by said influent water stream flowing downwards, while said exhausted water stream flows upwards away from them, thus maximizing the reduction of solids in said exhausted water stream and improving the efficiency of the treatment.

Preferably, said influent water stream is mixed by mixing means, said mixing means providing a mixing flow in a direction opposite to the flow direction of said influent water stream. Mixing said influent water stream allows for an improved reduction of dissolved nutrients and an improved recovery of precipitated salts, as turbulences promote the nucleating effect of the particles or crystals that form, thus increasing the efficiency of the crystallisation. Having said mixing flow in a direction opposite to the flow direction of said influent water stream improves even more the reduction of dissolved nutrients and the recovery of precipitated salts as it allows to generate a "delaying effect" by increasing the residence time of said precipitated particles within said influent wastewater flow, which results in more salts precipitating and bigger salt particles being obtained. In a further preferred embodiment of the method according to the invention, mixing means providing a mixing flow in a substantially upwards direction are used. Having the mixing flow in a direction opposite to the sedimentation direction of the precipitated particles direction, that in a substantially upwards direction opposite to a substantially downwards direction, is further advantageous as the delaying effect obtained by mixing. The residence time of the precipitating particles within said influent flow is increased and the efficiency of both the reduction of nutrients in the wastewater and the recovery of salts is improved.

Preferably, said mixing flow has a substantially upwards direction and an ascensional velocity equal to or higher than 20 m/h. More preferably, said mixing flow has an ascensional velocity between 20 m/h and 100 m/h. At this ascensional velocity within this preferred range, the efficiency of the method to reduce nutrients in the wastewater and to recover salts from it is optimal.

In the context of the invention, the expression "mixing means" refers to any equipment or component that allows generating a mixing flow within a liquid, preferably, within said influent water stream.

Preferably, said mixing means are aeration means, such that air bubbles are used to generate said mixing flow, more preferably in a direction substantially upwards, opposite to the flow direction of said influent water stream. Using aeration means, for example in the form of an air stone or any other type of diffuser connected to a compressed air system, allows to generate a mixing flow, preferably a mixing flow in an upwards direction, at low cost, with minimum maintenance and easily tuneable to a variety of speeds. By adjusting the airflow and the size of the bubbles introduced within said influent wastewater flow, it is possible to obtain homogenous mixing along the whole stream, thus improving the effectiveness of mixing.

Preferably, said exhausted water stream flows by said ion exchange membrane in a substantially upwards direction, more preferably said exhausted water stream flows with an ascensional velocity equal to or lower than the sedimentation velocity of the precipitated salt, and even more preferably with an ascensional velocity equal to or lower than 0.5 m/h. Adjusting the ascensional velocity of said exhausted water stream to an ascensional velocity lower than the sedimentation velocity of the precipitated salt particles that are forming within said influent wastewater flow allows to improve the recovery of said precipitated salt particles by reducing the amount of precipitated salt particles that end up within said exhausted water stream.

Preferably, said influent water stream flows such that a residence time within said influent water stream flowing by said ion exchange membrane is equal to or higher than 2 hours. More preferably, said influent water stream flows such that a residence time within said influent water stream flowing by said ion exchange membrane is between 2 hours and 24 hours. Adjusting the influent water stream flow such that a residence time of at least 2 hours, preferably of between 2 hours and 24 hours is achieved, allows more salts to precipitate while maintaining the duration of the treatment viable, by enhancing crystal growth, resulting in an exhausted water stream with a lower dissolved salts content, thus maximizing the recovery of precipitated salts.

In the context of the invention, the expression "residence time" is to be understood as the time that a particle remains at a particular location, for example, within said influent water stream flowing by said ion exchange membrane, or, referring to some of the embodiments described below, within a particular compartment, or section of a compartment.

Preferably, step [a] is performed by making said influent water stream flow in a direction substantially downwards through a first compartment, said first compartment having a first upper section and a first lower section, said first compartment having an inlet at said first upper section, and said first compartment being at least partially delimited by said ion exchange membrane at least at said first upper section, and step [b] is performed by making said exhausted water stream obtained in step [a] flow in a direction substantially upwards, opposite to said direction substantially downwards of said influent wastewater flow, through a second compartment, said second compartment having a second upper section and a second lower section, said second compartment having an outlet at said second upper section, and said second compartment being at least partially delimited by said ion exchange membrane at least at said second upper section, and said first and second compartments being fluidically connected with each other at their lower sections by a fluidic connection, such that said exhausted wastewater flow obtained in step [a] flows from said first compartment to said second compartment through said fluidic connection.

Preferably, the dimensions of said first and second compartment are respectively adapted and/or the flow of wastewater through said first and second compartments are adapted such that the ascensional velocity obtained within said second compartment is equal to or lower than 0.5 m/h and/or such that the residence time obtained within said first compartment is equal to or higher than 2 hours. Further preferred embodiments have dimensions and/or flows adapted to achieve an ascensional velocity within said second compartment between 0.1 and 0.5 m/h and/or a residence time within said first compartment between 2 hours and 24 hours. As mentioned above, the ascensional velocity of the exhausted water stream and the residence time within said influent wastewater are two key parameters allowing obtaining an optimal performance of treatment of the wastewater. In this embodiment, an optimal performance of the treatment is to be understood as obtaining the maximum reduction in dissolved salts at the lowest cost.

Preferably, said influent water stream is mixed in said first compartment by mixing means, said mixing means being adapted and arranged to provide a mixing flow within said first compartment in a direction substantially upwards, opposite to said substantially downwards direction of said influent water stream, and more preferably said mixing means being adapted and arranged to provide an ascensional velocity equal to or higher than 20 m/h, even more preferably an ascensional velocity between 20 m/h and 100 m/h, within said first compartment.

In a further preferred embodiment, said mixing means are adapted and arranged to provide a mixing flow within said upper section of said first compartment. More preferably, said mixing means are adapted and arranged to provide an ascensional velocity equal to or higher than 20 m/h, even more preferably an ascensional velocity between 20 m/h and 100 m/h, within said first upper section of said first compartment.

The advantages outlined above derived from including the mixing of said influent water stream while step [a] takes place apply to this embodiment in the same way. Having each step, that is the precipitation step, and the neutralisation step performed in a different compartment, benefits from the advantages outlined above.

Preferably, the method according to the invention included a step c) of recovering said precipitated salts from said influent water stream. More preferably said recovery of said precipitated salts from said influent water stream and/or from said exhausted water stream is performed by purging, that is by diverting a portion of said influent water stream and/or of said exhausted water stream, especially preferably, a portion of said influent water stream and/or of said exhausted water stream flowing within said lower section of said first compartment, such that said precipitated salts do not flow with said exhausted water stream to said second compartment.

Preferably, said precipitated salts are purged from said first compartment at a flow rate equal to or lower than 20% of the feeding inflow use to feed to said influent water stream into said first compartment. Purging at this preferred flow rate ensures that most of the wastewater flows with the exhausted water stream while a sufficient reduction in solids is obtained and purged out of the system.

Preferably, said water treating device further comprises an inlet configured to lead to said first upper section of said first compartment to allow water to enter in said first compartment, and a first outlet configured to lead to said second upper section of said second compartment to allow treated water to exit from said second compartment,

Preferably, the water treating device according to the invention further comprises mixing means adapted and arranged to provide a mixing flow in a direction substantially upwards within said first compartment, preferably mixing means adapted and arranged between said first upper section and said first lower section of said first compartment.

Preferably, the water treating device according to the invention further comprises mixing means adapted and arranged to provide an ascensional velocity equal to or higher than 20 m/h, more preferably an ascensional velocity between 20 m/h and 100 m/h, within said first compartment, even more preferably, within said first upper section of said first compartment.

Having mixing means adapted and arranged to provide a mixing flow in a direction substantially upwards within said first compartment has the advantages mentioned above with regards to mixing said influent water stream. Having said mixing means arranged between said first upper section and said first lower section of said first compartment allows to provide mixing only to the upper section of said first compartment and to not disturb precipitated salt particles or crystals that are settling and that have reached the lower section of said first compartment. Thus, the recovery of said precipitated salt particles or crystals is improved.

Preferably, the water treating device according to the invention comprises a container body, said container body comprising a perimetral wall and a bottom wall.

Preferably, said ion exchange membrane delimits, in combination with said perimetral wall of said container body, said first upper section of said first compartment and said second upper section of said second compartment.

Preferably, said first lower section of said first compartment and said second lower section of said second compartment are delimited within said container body by a plane extending as a prolongation of said ion exchange membrane towards said bottom wall of said container body, more preferably between said perimetral wall, said bottom wall and said plane extending as a prolongation of said ion exchange membrane towards said bottom wall of said container body.

Preferably, said container body has a tubular shape, more preferably a cylindrical shape. Even more preferably, a tubular shape or a cylindrical shape extending in a vertical direction.

Preferably, said ion exchange membrane has a tubular shape More preferably, said tubular shape is a cylindrical shape. Even more preferably, said tubular shape or said cylindrical shape extending in a vertical direction.

Preferably said ion exchange membrane comprises an ion exchange membrane internal space, said ion exchange membrane internal space being located within said tubular shape of said ion exchange membrane, and said ion exchange membrane comprises an ion exchange membrane external space, said ion exchange membrane internal space being located outside of said tubular shape of ion exchange membrane.

Preferably, said ion exchange membrane is arranged within said container body to delimit said first compartment and said second compartment within said container body.

Preferably, said ion exchange membrane is arranged within said container body to delimit said first compartment within said ion exchange membrane internal space of said tubular shape of said ion exchange membrane, and to delimit said second compartment between said perimetral wall of said container body and said ion exchange membrane, within said ion exchange membrane external space of said tubular shape of said ion exchange membrane. More preferably, said first upper section of said first compartment is delimited within said ion exchange membrane internal space of said tubular shape of said ion exchange membrane, and said second upper section of said second compartment is delimited between said perimetral wall of said container body and said ion exchange membrane, within said ion exchange membrane external space of said tubular shape of said ion exchange membrane.

Preferably, said first lower section of said first compartment and said second lower section of said second compartment are delimited within said container body by a plane extending as a prolongation of said tubular shape of said ion exchange membrane towards said bottom wall of said container body.

The tubular design of the water treating device according to the invention has several advantages. For example, it allows to optimize the space occupancy of the water treating device allow to treat a maximum amount of wastewater with the minimum footprint. Further, it allows taking most advantage of gravity to carry out the wastewater treatment, thus allowing low energy consumption and a low cost during operation. In addition, the tubular design of the water treating device according to the invention is easily scalable, allowing increasing the capacity of the water treating device in height without increasing its footprint.

Preferably, said first and second electrodes have each a tubular shape, more preferably a cylindrical shape.

Preferably, said first and second electrodes have each a tubular shape, more preferably a cylindrical shape, and said first electrode is arranged within said ion exchange membrane internal space, and said second electrode is arranged within said ion exchange membrane external space.

Preferably, said first and second electrodes are each arranged coaxially with said ion exchange membrane.

Preferably, said first electrode is arranged within said first compartment, more preferably within said first upper section of said first compartment.

Preferably, said second electrode is arranged within said second compartment, more preferably within said second upper section of said second compartment.

Preferably, said first and second electrodes are arranged, respectively, within said first and second compartments, more preferably respectively within said first upper section of said first compartment and within said second upper section of said second compartment.

Using a tubular design, preferably a cylindrical design, for the electrodes maximizes the surface available for the water reduction / oxidation reactions to take place, thus maximizing the efficiency of the water treating device to adjust of the pH of the water streams during operation.

Preferably, said first and second electrodes are each a mesh electrode. Using mesh electrodes allows maximizing the surface of each electrode that is in contact with the water stream being treated, while allowing water to flow through it and to flow by said ion exchange membrane, thus avoiding dead spaces between the electrodes and the ion exchange membrane where flow is blocked. Mesh electrodes also minimize the formation of laminar flows within the compartments that would negatively affect, for example, the homogeneity of the pH within each water stream, thus be detrimental for efficient treatment.

Preferably, the water treating device according to the invention further comprises a tapering section, said tapering section having a tapering cross-section in a direction substantially downwards, and said tapering section ending at a second outlet, and said tapering section being adapted and arranged to collect particles precipitating in said first compartment, such as precipitated salt particles or crystals obtained in step [a], and direct said precipitated salt particles or crystals towards said second outlet.

Preferably, the method according to the invention is performed using a water treating device according to the invention.

The invention also refers to the use of a method according to the invention to isolate and/or purify salts from a water stream, preferably from a wastewater stream.

The invention also refers to the use of a water treating device according to the invention to isolate and/or purify salts from a water stream, preferably from a wastewater stream.

Likewise, the invention also includes other features of detail illustrated in the detailed description of several embodiments of the invention.

### Brief description of the drawings:

Figure 1 shows a first schematic representation of the method according to the invention.
Figure 2 shows a second schematic representation of the method according to the invention.
Figure 3 shows a third schematic representation of the method according to the invention.
Figure 4 shows a schematic representation of a first embodiment of the water treating device according to the invention.
Figure 5 shows a schematic representation of a longitudinal cross-section view of a second embodiment of the water treating device according to the invention.
Figure 6 shows a schematic representation of a longitudinal cross-section view of a third embodiment of the water treating device according to the invention.
Figure 7 shows a schematic representation of a transverse cross-section view of the upper section of the third embodiment of the water treating device according to the invention.
Figures 8 show a schematic representation of fourth embodiment of the water treating device according to the invention with a detail view of an area of said fourth embodiment of the water treating device according to the invention.

### Detailed description of embodiments of the invention

The method according to the invention involves treating a water stream, preferably wastewater stream, for the precipitation of nutrients from said water stream. This is achieved through electrochemical pH control, obtaining simultaneously the adjustment of the pH of an influent water stream to a pH suitable for the precipitation of the target nutrients / salts, and the neutralization of the pH of the resulting exhausted water stream, preferably said exhausted water stream, depleted from said nutrients / salts. Said neutralization involves returning said exhausted water stream to the pH that the initial water stream had before treating it, typical at neutral pH in the range of 7-8. However, the method according to the invention can also be used to adjust the pH of an acidic water or wastewater stream, for example to increase its pH to a neutral or an alkaline pH, and then to return it to its acidic pH after being treated, if the intended use requires it.

The recovered precipitated product may consist of, for example, a pure salt or a mixture therefore, derived from nutrients such as phosphorus (P), potassium (K), or nitrogen (N), and trace elements such as magnesium (Mg) or calcium (Ca).

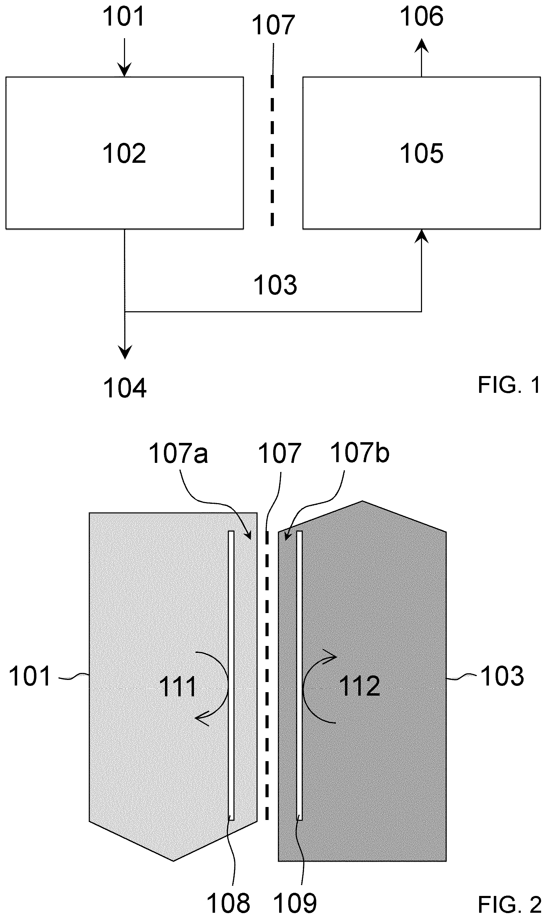

In a first embodiment represented in Figures 1 and 2, the method according to the invention includes the following steps: a precipitation step (102) and a neutralization step (105). These steps that take place simultaneously and continuously in reactor or other suitable equipment by circulating an influent water stream first by a first side (107a) and then by a second side (107b) of an ion exchange membrane and generating a difference in electric potential, that is applying a voltage, between the first and second sides (107a, 107b) of the ion exchange membrane.

In this first embodiment, the water stream to be treated is an acidified sludge, which is considered as an exemplary wastewater stream that can be treated by the method according to the invention. In this first embodiment, the exhausted water stream obtained after step [a] is an exhausted wastewater stream that has a reduced content of dissolved salts. The treated water stream obtained at the end of the treatment is a water stream with a reduced content of dissolved salts and a neutral pH, as explained below.

The ion exchange membrane is a cationic exchange membrane (CEM) and the electric potential difference applied by using two electrodes (108, 109) located one at each side of the CEM and are each in contact, respectively, with the influent wastewater stream (101) or the exhausted wastewater stream (103), provides a constant current of 5 amperes flowing across said CEM.

For the precipitation step (step [a] - 102), the influent wastewater stream (101) is guided by a first side of the CEM, and its pH is electrochemically adjusted to a pH of 11.5, a pH suitable to obtain the precipitation of potassium, phosphorus, and magnesium compounds in the form of precipitated salts (104). An exhausted wastewater stream (103) depleted of dissolved salts is also obtained.

For the neutralisation (step [b] - 105), the exhausted water stream (103) obtained in step [a] is guided by the second side is electrochemically neutralised to a pH in the range of 7-8 to obtain a treated wastewater stream (106).

By creating a difference in electric potential between said first and second sides (107a, 107b) of said ion exchange membrane (107), said steps [a] and [b] are performed simultaneously and continuously. In step [a], the electrochemical adjustment of the pH of the influent wastewater stream (101) is obtained by a first water reduction reaction (111) occurring within the influent wastewater stream in proximity of the first electrode (108), which in this example acts as a cathode. In step [b], the electrochemical neutralisation of the pH of the exhausted wastewater stream (103) is obtained by a second water oxidation reaction (112) occurring within the exhausted wastewater stream (103) in proximity of the second electrode (109), which in this example acts as an anode.

Exemplary equations of the water reduction / oxidation reaction are:

Cathode (reduction 111): 2H⁺(aq) + 2e⁻ → H₂(g)

Anode (oxidation 112): H₂O(l) → 1/2 O₂(g) + 2 H⁺(aq) + 2e⁻

As both reactions are driven by the same difference in electric potential, the second water oxidation reaction (112) occurring in step [b] being the reverse water reduction reaction of said first water reduction/oxidation reaction (111) occurring in step [a].

The experimental setup for the implementation of this embodiment of the method according to the invention can be an electrochemical system such as the one described below. This electrochemical system comprises a working electrode as the first electrode (108) acting as cathode, placed on the first side (107a) of the CEM, a counter electrode, as the second electrode (109) acting as anode, placed on the second side (107b) of the CEM, such that the CEM is positioned between both electrodes. The CEM allows the maintenance of a pH difference between the working electrode environment (WEE) and the counter electrode environment (CEE) and allows balancing the charge between them.

The cathode can be made for example, of stainless steel and the anode can be made for example, of titanium-mixed metal oxide (Ti-MMO). Any other conductive materials and preferably materials that do not degrade, for example, non-sacrificial materials, are considered suitable for the invention.

Using the first electrode (108) as cathode and the second electrode (109) as anode, or vice versa, depends on whether a decrease or an increase of pH is targeted in the influent wastewater stream (101). Both electrodes are connected to a power source to apply the required DC voltage according to the desired target pH of the influent wastewater stream (101). The water stream to be treated is continuously introduced into the by the first side (107a) of the CEM, where the first electrode (108) is situated. While continuous precipitation occurs in the WEE, the exhausted water stream (103) is continuously directed to the CEE to achieve a neutral pH before being discharged.

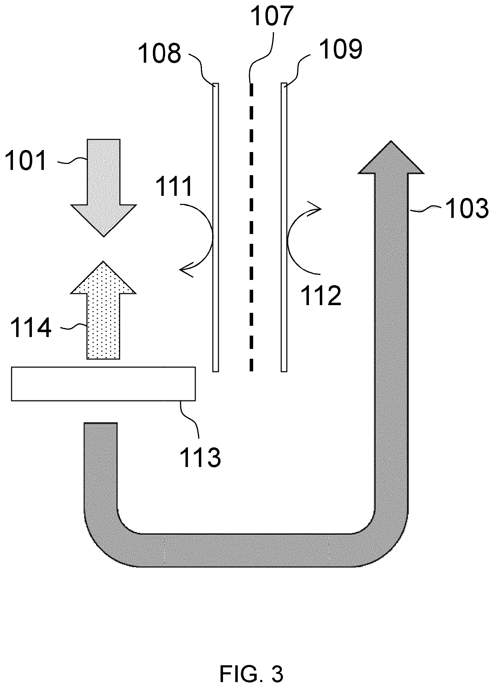

Figure 3 shows a second embodiment of the method according to the invention that shares most of the features with the previous embodiment, and wherein the influent wastewater stream (101) is mixed by mixing means (113) that provide a mixing flow (114) in a direction opposite to the flow direction of the influent wastewater stream (101), in this example, in an upwards direction. This allows for an improved reduction of dissolved nutrients and an improved recovery of precipitated salts from the treated water, as turbulences are generated and promote a nucleating effect of the already formed particles or crystals, thus increasing the efficiency of the crystallisation. Said mixing flow is adjusted to provide an ascensional velocity equal to or higher than 20 m/h, for example between 20 m/h and 100 m/h, within said influent wastewater stream (101) to optimize the efficiency of the method to reduce nutrients in the wastewater and to recover salts from it is optimal.

In this example, an aeration unit, formed by a pump connected to a diffuser via a transfer tube, is used to generate the mixing flow with an up-flow or ascensional velocity, thus generating turbulence, in the working electrode environment. The hydraulic forces generated therein promote the separation of the precipitated salts from the water such that the precipitated salts can be continuously recovered.

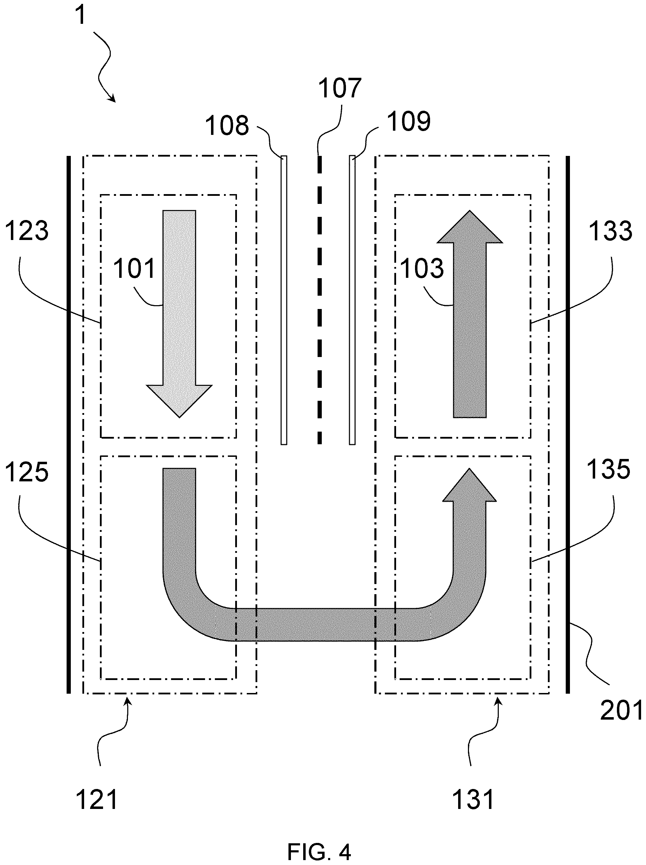

Figure 4 shows a first embodiment of the water treating device according to the invention, allowing a second embodiment of the method according to the invention to be implemented.

In this embodiment, the experimental setup comprises an electrochemical system, consisting of a first electrode (108) and a second electrode (109) connected to a power source (not shown). In this example, the first electrode (108) acts as working electrode and as cathode and is arranged in an upper section (123) of a first compartment (121) acting as working electrode compartment (WEC). The second electrode (109) acts as counter electrode and as anode and is arranged in an upper section (133) of a second compartment (131) acting as counter electrode compartment (CEC).

In this embodiment, the electrochemical system is arranged with a container body (201) and the ion exchange membrane is arranged between both electrodes and delimits the first and the second compartments (121, 131) at least at their upper sections (123, 133) within this container body. In this embodiment, the membrane is a cationic ion exchange membrane (CEM) allowing the maintenance of a pH difference between the working electrode compartment (WEC) and the counter electrode compartment (CEC), which is one of the key elements to promote precipitation.

In this embodiment, the water to be treated is continuously introduced in the container body by its open top part, acting as first inlet, into the working electrode compartment (WEC), where the working electrode is situated. While continuous precipitation occurs in the WEC, the exhausted water (exhausted water) is continuously directed to the counter electrode compartment (CEC) to achieve a neutral pH.

When the cathode serves as the working electrode hydroxyl ions are generated by the cathode due to water reduction in the working electrode compartment increasing pH, and triggering crystallization reactions. The exhausted water then flows to the counter electrode compartment, where protons are generated by the anode due to water oxidation, lowering the pH until it reaches the neutrality.

When the anode serves as the working electrode proton ions are generated by the working electrode compartment due to water oxidation, decreasing pH and triggering crystallization reactions. The exhausted water, then, flows to the counter electrode compartment, where hydroxyl ions are generated by the cathode due to water reduction, raising the pH until it reaches the neutrality.

In this embodiment, precipitated salts are recovered at the bottom of the container body (201), not shown.

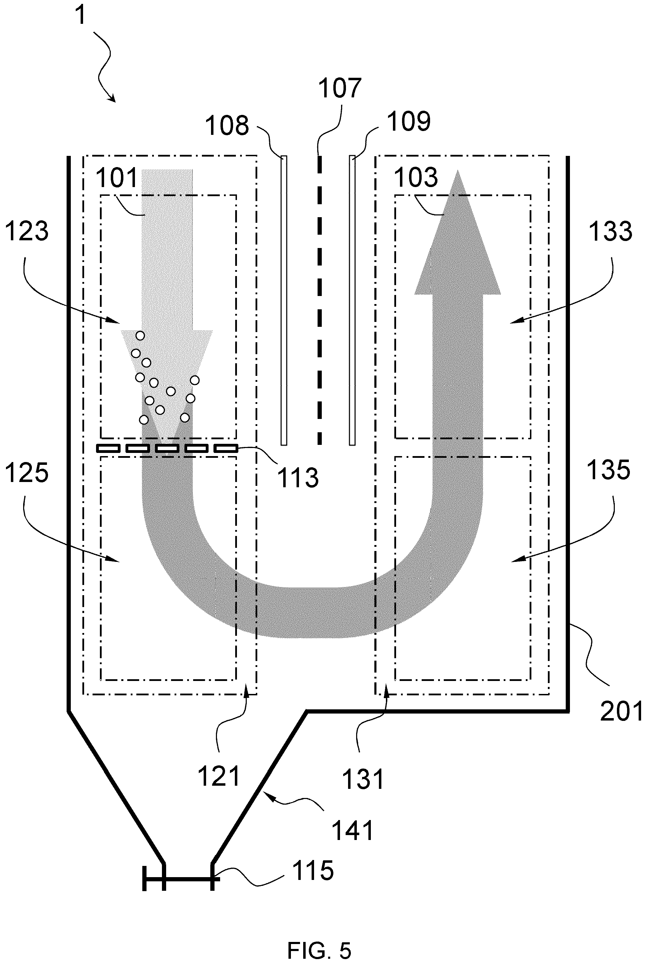

In a second embodiment, shown in Figure 5 and sharing most of the features with the embodiments described above, the water treating device according to the invention comprises an aeration unit formed by a pump connected to a diffuser via a transfer tube is used as mixing means (113). This aeration unit serves to generate up-flow velocity, so turbulence, in the upper section (123) of the first compartment (121), here the working electrode compartment.

The hydraulic forces generated in the first compartment, preferably in the upper section (123) of the first compartment (121), promote a better separation of the salts from the water by precipitation and growth of the precipitated salt particles, thus improving its recovery by sedimentation. The bottom wall of the water treating device (1) in the region below said first compartment (121) is designed to delimit a tapering section (141) within the container body (201) that allows the settling of the precipitated solids. This tapering section (141) is not physically separated from said first compartment, so that the precipitated salts can be continuously recovered from the lower zone of the water treating device (1) a second outlet (115).

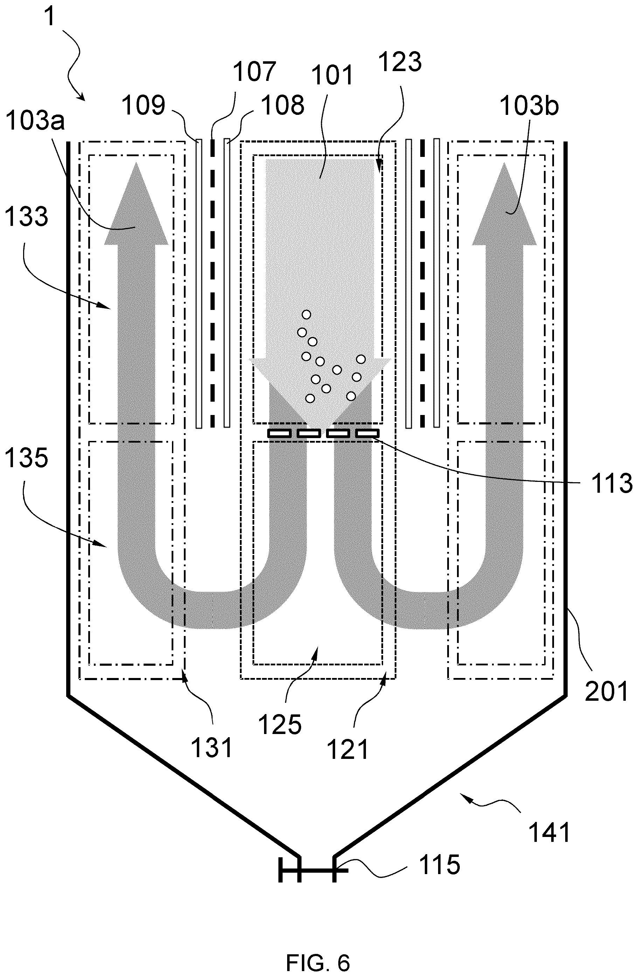

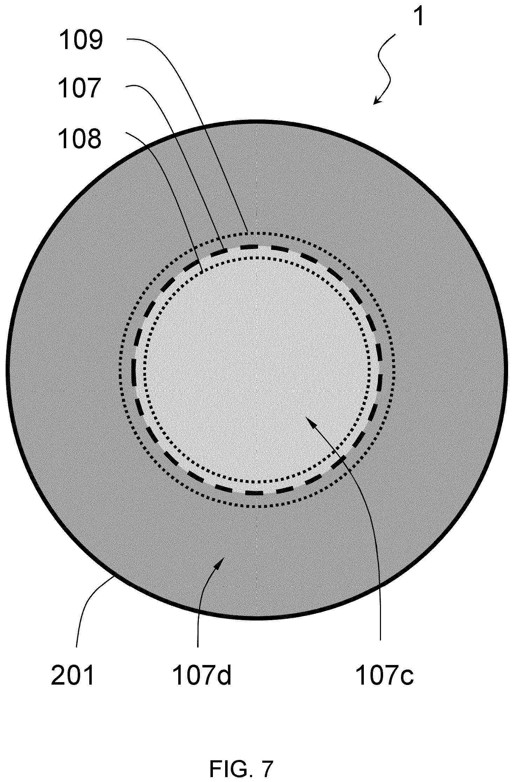

In a third preferred embodiment, shown in Figures 6 and 7, the water treating device (1) according to the invention has a tubular design and comprises an electrochemical system integrated into a crystallizer frame.

In this embodiment, the water treating device (1) according to the invention comprises a container body (201), in the form of a cylindrical crystallizer frame, with a perimetral wall and a bottom wall. The perimetral wall defines the cylindrical shape of the container body (201). The water treating device (1) also comprises an ion exchange membrane (107). The ion exchange membrane (107) has a cylindrical shape and delimits an internal space (107c) within said cylindrical shape, and an external space (107d) outside said cylindrical shape. The ion exchange membrane (107) is arranged within the container body (201) to delimit the first compartment (121) and said second compartment (131) within the container body (201). These features can be part of other embodiments of the invention and provide the same advantages.

The first compartment (121) has a first upper section (123) and a first lower section (125) and is delimited by the ion exchange membrane (107) at the first upper section (123). The second compartment (131) has a second upper section (133) and a second lower section (135) and is delimited by the ion exchange membrane (107) at said second upper section (133).

In this embodiment, the ion exchange membrane (107) delimits, in combination with said perimetral wall of said container body (201), said first upper section (123) of said first compartment (121) and said second upper section (123) of said second compartment (131). Regarding the first lower section (125) of the first compartment (121) and the second lower section (135) of the second compartment (131), they are delimited within said container body (201) between a plane extending as a prolongation of said ion exchange membrane (107) towards said bottom wall of said container body (201) and the perimetral wall of the container body (201), without any physical barrier between them, such that the first and second compartments (121, 131) are fluidically connected with each other at their lower sections (125, 135).

In this embodiment, the water treating device (1) also comprises a first inlet configured on the upper section (123) of the first compartment (121) to allow wastewater to enter in the water treating device (1) and a first outlet configured on the upper section (133) of said second compartment (131) to allow treated wastewater to exit the water treating device (1). In this embodiment, the wastewater to be treated enters the water treating device through an inlet configured as the open top of the container body (201) to reach the upper section (123) of the first compartment (121). The first inlet can also be configured, for example, as an opening on a lid arranged at the top of said container body (201). The treated wastewater exits the water treating device (1) through the upper section (133) of the second compartment (131) by a first outlet that can be configured, for example, as an opening on the perimetral wall of the container body, or, for example, as an overflow by the top of the container body (201), particularly by the top of the second compartment (131), as shown in Figure 6.

In this embodiment, the water treating device (1) further comprises a first electrode (108) and a second electrode (109). In this embodiment, said first and second electrodes (108, 109) are each a mesh electrode. The first electrode (108) is adapted and arranged within the first upper section (123) of said first compartment (121) and said second electrode (109) is adapted and arranged within the second upper section (133) of the second compartment (131). Both electrodes are connected to a power source (not shown), as explained above, such as to allow an electric current to be applied across said ion exchange membrane (107). In this embodiment, the first and second electrodes (108, 109) have each a tubular shape, particularly a cylindrical shape, and said first electrode is arranged within said ion exchange membrane internal space, and said second electrode is arranged within said ion exchange membrane external space. Said first and second electrodes are each arranged coaxially with the ion exchange membrane (107), as shown in Figure 7, such that the first electrode (108) is arranged within the first compartment (121), particularly within the upper section (123) of the first compartment (121) and the second electrode (109) is arranged within the second compartment (131), particularly within the upper section (133) of the second compartment (131), as shown in Figure 6. This embodiment benefits from the tubular design of the electrodes, which maximizes the surface available for the water reduction / oxidation reactions to take place, thus maximizing the efficiency of the water treating device. These features can be part of other embodiments of the invention and provide the same advantages.

In the third preferred embodiment shown in Figures 6 and 7, the water treating device (1) further comprises mixing means (113) in the form of aeration means, as described above. Here, the mixing means (113) are adapted and arranged to provide a mixing flow (114) in a direction substantially upwards within the first upper section (123) of the first compartment (121), and to provide an ascensional velocity equal to or higher than 20 m/h, for example between 20 m/h and 100 m/h, within the first upper section (123) of said first compartment (121).

In this exemplary third embodiment of the water treating device according to the invention, the bottom wall of the container body (201) defines a tapering section (141) within the container body (201) that ends at a second outlet (115). This tapering section (141) allows to efficiently collect the particles that precipitate in the first compartment (121) and direct them towards the second outlet (115).

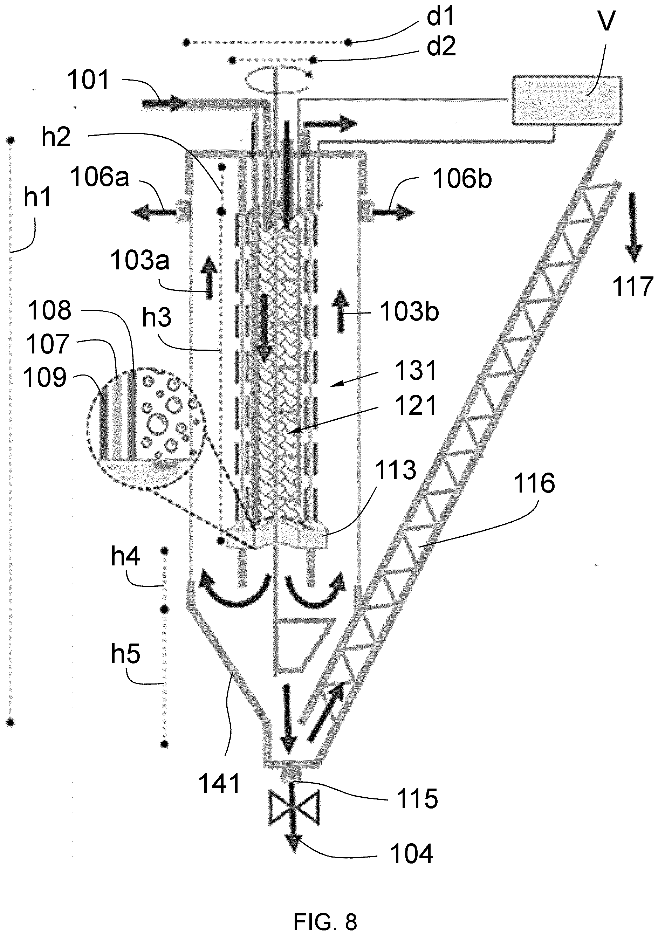

The tubular design of this third embodiment of the water treating device (1) according to the invention, particularly the tubular design of the container body (201) and or the tubular design of the electrochemical system formed by the ion exchange membrane (107) and the two electrodes (108, 109) individually and in combination, provide several advantages. For example, to allow to optimize the space occupancy of the water treating device such as to treat a maximum amount of wastewater with the minimum footprint. Further, to allow to take the most advantage of gravity to carry out the wastewater treatment allow for an operation with low energy consumption and at a low cost. In addition, the tubular design of any of the above features individually, and particularly the combination of tubular features, makes the water treating device according to the invention is easily scalable, allowing to increase its in height without increasing its footprint, and simplifying its construction at large scale. This is exemplified by the embodiment of the water treating device shown in Figure 8. Moreover, the flow of water within these tubular shaped embodiments is simplified and improved, as the influent wastewater (101) can be fed by the top of the device, and the treated water (106a, 16b) collected by outlets located at the top of the perimetral wall of the cylindrical container body (201).

Regarding the dimensions of the water treating device according to the invention, they can be adapted to the scale needed, and to adjust the flows within each compartment, according to the desired treatment outcome.

For example, a water treating device suitable for treating water at laboratory scale can have the following dimensions. The crystallizer frame has a cylindrical configuration, with a diameter of 11 cm and a height of 50 cm. A tubular cathode with a diameter of 4.7 cm and a height of 25 cm made of stainless-steel mesh can be used as a working electrode and a tubular anode with a diameter of 7.5 cm and a height of 25 cm (made of platinized titanium mesh can be used as a counter electrode. The two electrodes can be separated by a tubular CEM with a height of 25 cm. The influent flow rate in this laboratory scale water treating device is 62 mL/min and the purge flow rate at the second outlet is 12 mL/min. The hydraulic retention time in the WEC is 46 min. This laboratory scale water treating device can and has been used to obtain a precipitated mixtures of salts comprising a mixture of struvite (magnesium phosphate compounds) with a phosphorus content of 5% and a potassium content of 3%.

As another dimensioning example, a pilot scale water treating device according to the invention is shown in Figure 8 and can have the following dimensions:

| | | | |
|---|---|---|---|
| h1 = 150 cm | h2 = 10 cm | h3 = 100 cm | h4 = 20 cm |
| h5 = 20 cm | d1 = 25 cm | d2 = 10 cm | |

The total volume of this pilot scale water treating device is 67 L. The volume in the upper section of the working electrode compartment (WEC) is 8 L and the volume in the upper section of the counter electrode compartment (CEC) is 41 L.

This embodiment shares most of the features with the above-described embodiments, and, particularly, comprises a cylindrically shaped container body (201) and a first and second electrodes (108, 109), particularly mesh electrodes, connected to a power source (V), such as to allow a difference in electric potential to be applied across the ion exchange membrane (107), and an electric current to flow across the ion exchange membrane (107). In this embodiment, the ion exchange membrane (107), and the first and second electrodes (108, 109), have each a cylindrical shape and are arranged coaxially, such that the first electrode (108) is arranged within the first compartment (121) and the second electrode (109) is arranged within the second compartment (131). In this embodiment, the ion exchange membrane (107) and the first and second electrodes (108, 109) extend along the full length of the container body (201) from the top of the container body (201) to its tapering bottom section (141), as shown in Figure 8. This allows to maximize the area where water reduction/oxidation occurs. This feature can be implemented in any of the embodiment of the invention with the same advantages.

At a pilot scale, the water treating device according to the invention further comprises precipitate extraction means (116) that allow to continuously remove concentrated precipitated salts (115) that accumulate in the tapering section (141). This is advantageous when large quantities of precipitated salts are expected to be obtained by treating large amounts of wastewater, or wastewater very concentrated in dissolved salts, and purging a fraction of the water containing said precipitated salts would involve handling a large and impractical volume of liquid.

## Claims

1. A method for continuously treating a water stream (101), **characterised in that** said method comprises the following steps:
[a] a precipitation step (102), wherein in said precipitation step (102) the pH of an influent water stream (101) is electrochemically adjusted to a pH suitable for the precipitation of a salt, said salt being dissolved in said influent water stream (101), to obtain a precipitated salt (104) and an exhausted water stream (103), and
[b] a neutralisation step (105), wherein in said neutralisation step (103) the pH of said exhausted water stream (103) is electrochemically neutralised to obtain a treated water stream (106),
wherein said step [a] is performed by making said influent water stream (101) flow by a first side (107a) of an ion exchange membrane (107) and step [b] is performed by making said exhausted water stream (103) obtained in step [a] flow by a second side (107b) of said ion exchange membrane (107), said second side (107b) being opposite to said first side (107a) of said ion exchange membrane (107), and by creating a difference in electric potential between said first and second sides (107a, 107b) of said ion exchange membrane (107), such that said steps [a] and [b] are performed simultaneously and continuously, and such that in step [a] the electrochemical adjustment of the pH of said influent water stream (101) is obtained by a first water reduction/oxidation reaction (111) occurring in said influent water stream (101) and in step [b] the electrochemical neutralisation of the pH of said exhausted water stream (103) is obtained by a second water oxidation/reduction reaction (112) occurring in said exhausted water stream (103), said second water oxidation/reduction reaction (112) occurring in step [b] being the reverse water oxidation/reduction reaction of said first water reduction/oxidation reaction (111) occurring in step [a].

2. The method according to claim 1, **characterised in that** said difference in electric potential created between said first and second sides (107a, 107b) of said ion exchange membrane (107) is obtained by applying a voltage between a first and a second electrodes (108, 109), and generating an electric current flowing between said first and said second electrodes (108, 109), one of said first and second electrodes (108, 109) being arranged by said first side (107a) of said ion exchange membrane (107) and in contact with said influent water stream (101), and the other of said first and second electrodes (108, 109) being arranged by said second side (107b) of said ion exchange membrane (107) and in contact with said exhausted water stream (103), preferably, wherein said first electrode (108) is a cathode, and said second electrode (109) is an anode, said cathode being arranged by said first side (107a) of said ion exchange membrane (107) and said cathode being in contact with said influent water stream (101), and said anode being arranged by said second side (107b) of said ion exchange membrane (107) and said anode being in contact with said exhausted water stream (103), such that in step [a] the pH of said influent water stream (101) can be increased by a water reduction reaction (111) occurring in said influent water stream (101) and in step [b] the pH of said exhausted water stream (103) can be decreased by a water oxidation reaction (112) occurring in said exhausted water stream (103), said water oxidation reaction (112) being the reverse reaction of said water reduction reaction (111) occurring in step [a].

3. The method according to any one of claims 1 or 2, **characterised in that** in step [a], said influent water stream (101) flows in a substantially downwards direction and in step [b], said exhausted water stream (103) flows in a substantially upwards direction opposite to said substantially downwards direction, and **in that** said ion exchange membrane (107) extends vertically between said influent water stream (101) and said exhausted water stream (103) in a direction substantially parallel to said substantially downwards and said substantially upwards directions.

4. The method according to any one of claims 1 to 3, **characterised in that** said influent water stream (101) is mixed by mixing means (113), said mixing means (113) providing a mixing flow (114) in a direction substantially opposite to the flow direction of said influent water stream (101), preferably by mixing means (113) providing a mixing flow in a substantially upwards direction, and more preferably by mixing means providing a mixing flow in a substantially upwards direction and with an ascensional velocity equal to or higher than 20 m/h, even more preferably an ascensional velocity between 20 m/h and 100 m/h.

5. The method according to claim 3, **characterised in that** said mixing means (113) are aeration means, such that air bubbles are used to generate said mixing flow (114) in a direction substantially upwards, opposite to the flow direction of said influent water stream (101).

6. The method according to any one of claims 1 to 5, **characterised in that** said exhausted water stream (103) flows in a substantially upwards direction by said ion exchange membrane (107), preferably said exhausted water stream (103) flows with an ascensional velocity equal to or lower than the precipitation velocity of the precipitated salt, and more preferably with an ascensional velocity equal to or lower than 0.5 m/h, even more preferably with an ascensional velocity comprised between 0.1 m/h and 0.5 m/h.

7. The method according to any one of claims 1 to 6, **characterised in that** said influent water stream (101) flows such that a residence time within said influent water stream (101) by said ion exchange membrane (107) is equal to or higher than 2 hours, preferably such that a residence time within said influent water stream (101) by said ion exchange membrane (107) is comprised between 2 hours and 24 hours.

8. The method according to any one of claims 1 to 7, **characterised in that** step [a] is performed by making said influent water stream (101) flow in a direction substantially downwards through a first compartment (121),
said first compartment (121) having a first upper section (123) and a first lower section (125), said first compartment (121) having an inlet configured at said first upper section (123), and said first compartment (121) being at least partially delimited by said ion exchange membrane (107) at least at said first upper section (123) of the first compartment (121), and
step [b] is performed by making said exhausted water stream (103) obtained in step [a] flow in a direction substantially upwards, opposite to said direction substantially downwards of said influent wastewater flow (101), through a second compartment (131),
said second compartment (131) having a second upper section (133) and a second lower section (135), said second compartment (131) having an outlet configured at said second upper section (133), and said second compartment (131) being at least partially delimited by said ion exchange membrane (107) at least at said second upper section (133) of the second compartment (131), and
said first and second compartments (121, 131) being fluidically connected with each other at their lower sections (125, 135) by a fluidic connection, such that said exhausted wastewater flow obtained in step [a] flows from said first compartment (121) to said second compartment (131) through said fluidic connection.

9. The method according to claim 8, **characterised in that** the dimensions of said first and second compartments (121, 131) are adapted and/or the flow rates of wastewater through said first and second compartments (121, 131) are adapted such that the ascensional velocity obtained in said second compartment (131) is equal to or lower than 0.5 m/h and/or such that the hydraulic residence time obtained within said first compartment (121) is equal to or more than 2 hours.

10. The method according to any one of claims 8 or 9, **characterised in that** said influent water stream (101) is mixed in said first compartment (121) by mixing means (113), said mixing means (113) being adapted and arranged to provide a mixing flow (114) within said first compartment (121) in a direction substantially upwards, opposite to said substantially downwards direction of said influent water stream (101), and preferably said mixing means being adapted and arranged to provide an ascensional velocity equal to or higher than 20 m/h, more preferably an ascensional velocity between 20 m/h and 100 m/h, within said first compartment (121), and even more preferably within said upper section (123) of said first compartment (121).

11. The method according to any one of claims 8 to 10, **characterised in that** that said precipitated salts are purged (104) from said first compartment (121) at a flow rate equal to or lower than 20% of the feeding inflow use to feed to said influent water stream (101) into said first compartment (121).

12. A water treating device (1) for continuously treating a water stream, **characterised in that** it comprises
- a first compartment (121),
- a second compartment (131), and
- an ion exchange membrane (107),
said first compartment (121) having a first upper section (123) and a first lower section (125), and said first compartment (121) being at least partially delimited by an ion exchange membrane (107) at least at said first upper section (123) of the first compartment (125), and
said second compartment (131) having a second upper section (133) and a second lower section (135), and said second compartment (131) being at least partially delimited by said ion exchange membrane (107) at least at said second upper section (133) of the second compartment (131),
and **in that**
- said first and second compartments (121, 131) are fluidically connected with each other at their lower sections (125, 135) by a fluidic connection,
and **in that** said water treating device (1) further comprises
- a first electrode (108) and a second electrode (109), wherein said first electrode is adapted and arranged within said first upper section (123) of said first compartment (121) and said second electrode (109) is adapted and arranged within said second upper section (133) of said second compartment (131), such as to allow a difference in electric potential to be applied and an electric current flow across said ion exchange membrane (107).

13. The water treating device (1) according to claim 12, **characterised in that** it further comprises mixing means (113), said mixing means (113) being adapted and arranged to provide a mixing flow (114) in a direction substantially upwards within said first compartment (121), preferably within the said upper section (123) of said first compartment (121), and preferably said mixing means (113) being adapted and arranged to provide an ascensional velocity equal to or higher than 20 m/h, more preferably an ascensional velocity between 20 m/h and 100 m/h, within said first compartment (121), even more preferably, within said first upper section (123) of said first compartment (123).

14. The water treating device according to any one of claims 12 or 13, **characterised in that** it further comprises a container body (201), said container body comprising a perimetral wall and a bottom wall, and said ion exchange membrane (107) has a tubular shape, and said ion exchange membrane (107) delimits an internal space within said tubular shape of said ion exchange membrane (107) and an external space outside of said tubular shape of said ion exchange membrane (107), and said ion exchange membrane (107) is arranged within said container body (201) to delimit said first compartment (121) and said second compartment (131) within said container body (201), preferably to delimit said first compartment (121)within said internal space of said tubular shape of said ion exchange membrane (107), and to delimit said second compartment (131) between said perimetral wall of said container body and said ion exchange membrane (107), within said external space outside of said tubular shape of said ion exchange membrane (107).

15. The water treating device according to claim 14, **characterised in that** said first and second electrodes (108, 109) have each a tubular shape, and said first electrode is arranged within said ion exchange membrane internal space, and said second electrode is arranged within said ion exchange membrane external space, and said first and second electrodes (108, 109) are each arranged coaxially with said ion exchange membrane (107), such that said first electrode (108) is arranged within said first compartment (121), within said first upper section (123) of said first compartment (121), and said second electrode (109) is arranged within said second compartment (131), within said second upper section (133) of said second compartment (131), and said water treating device (1) comprises a tapering section (141), said tapering section (141) having a tapering cross-section in direction substantially downwards, and said tapering section (141) ending at a second outlet (115), and said tapering section (141) being adapted and arranged to collect particles precipitating in said first compartment (121), such as precipitated salt crystals obtained in step [a], and direct said particles precipitating in said first compartment (121) towards said second outlet (115).
